(19) Europäisches Patentamt
European Patent Office
Office européen des brevets

(11) **EP 2 331 630 B1**

(12) **EUROPÄISCHE PATENTSCHRIFT**

(45) Veröffentlichungstag und Bekanntmachung des Hinweises auf die Patenterteilung:
**23.10.2013 Patentblatt 2013/43**

(21) Anmeldenummer: **09782307.4**

(22) Anmeldetag: **28.08.2009**

(51) Int Cl.:
*C08L 9/00* *(2006.01)*     *C08K 3/36* *(2006.01)*
*C08K 3/04* *(2006.01)*     *B60C 1/00* *(2006.01)*

(86) Internationale Anmeldenummer:
**PCT/EP2009/061106**

(87) Internationale Veröffentlichungsnummer:
**WO 2010/034587 (01.04.2010 Gazette 2010/13)**

(54) **KAUTSCHUKMISCHUNG UND FAHRZEUGLUFTREIFEN MIT VERBESSERTER LUFTDICHTIGKEIT UND VERBESSERTER ERMÜDUNGSBESTÄNDIGKEIT**

RUBBER MIXTURE AND PNEUMATIC VEHICLE TIRE HAVING IMPROVED AIR TIGHTNESS AND IMPROVED FATIGUE STRENGTH

MÉLANGE DE CAOUTCHOUC ET PNEUMATIQUE DE VÉHICULE PRÉSENTANT UNE MEILLEURE ÉTANCHÉITÉ À L'AIR ET UNE MEILLEURE RÉSISTANCE À LA FATIGUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.09.2008 DE 102008049313**

(43) Veröffentlichungstag der Anmeldung:
**15.06.2011 Patentblatt 2011/24**

(73) Patentinhaber: **Continental Reifen Deutschland GmbH**
**30165 Hannover (DE)**

(72) Erfinder:
• **WILKE, Thomas**
**31542 Bad Nenndorf (DE)**

• **BINDER, Axel**
**30161 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-A- 2 090 613          WO-A-02/48257
DE-A1-102005 004 031     US-A- 4 598 105
US-A- 5 187 239

**Beschreibung**

Die Erfindung betrifft einen Fahrzeugluftreifen, wobei wenigstens zwei innere Bauteile des Fahrzeugluftreifens aus einer solchen qualitativ und quantitativ gleichen Kautschukmischung bestehen.

Da die Fahreigenschaften eines Reifens, insbesondere Fahrzeugluftreifens, nicht alleine von der Kautschukzusammensetzung des Laufstreifens abhängig sind, sondern auch die Kautschukzusammensetzungen der einzelnen inneren Bauteile das Fahrverhalten des Reifen beeinflussen, werden auch dort hohe Anforderungen an die Zusammensetzung der Kautschukmischung gestellt.

So sorgt z.B. in schlauchlosen Fahrzeugluftreifen eine möglichst luftundurchlässige, radial innen angeordnete Innenseele, auch Innerliner oder Innenplatte genannt, dafür, dass die in den Reifen eingeführte Luft nicht entweicht, was zu einer deutlich negativen Beeinträchtigung der Fahrverhaltens führen würde. Damit allerdings die Innenseele luftdicht bleibt, muss sie auch eine gute Riss- und Ermüdungsbeständigkeit aufweisen, damit im Fahrbetrieb keine Risse entstehen, die die Luftdichtigkeit beeinträchtigen. Rissbeständigkeit und ein gutes Abriebsverhalten werden z.B. auch von der Kautschukmischung der Seitenwand gefordert.

Es wurden daher bereits vielfältige Versuche unternommen, die Eigenschaften der jeweiligen Kautschukmischungen durch die Variation der Polymerkomponente, der Füllstoffe und der sonstigen Zuschlagstoffe positiv zu beeinflussen. Dabei muss man berücksichtigen, dass eine Verbesserung in der einen Eigenschaft oft eine Verschlechterung einer anderen Eigenschaft mit sich bringt. So ist eine Verbesserung der  Rissbeständigkeit in der Regel mit einem erhöhten Wärmeaufbau, mit einem schlechteren Abriebsverhalten und oft auch mit einer Verschlechterung der Luftdurchlässigkeit verbunden.

Als Kautschuke für die Innenseele, werden üblicherweise Chlorbutylkautschuk oder Brombutylkautschuk, gelegentlich im Verschnitt mit Naturkautschuk, eingesetzt. Diese Kautschuktypen weisen eine geringe Gasdurchlässigkeit auf. Durch die Zudosierung von voluminösen wenig bzw. nicht aktiven Füllstoffen und / oder Füllstoffen mit Schicht- oder Plättchenstruktur kann die Luftdichtigkeit weiter erhöht werden, gleichzeitig werden dadurch allerdings die Riss- und Ermüdungseigenschaften verschlechtert.

Zum Stand der Technik sind folgende Druckschriften zu würdigen:

(D1) DE 100 58 297 A1
(D2) DE 100 59 287 B4
(D3) DE 10 2005 044 999 A1
(D4) EP 0 178 079 A1
(D5) DE 10 2005 004 031 A1
(D6) US 4 598 105 A
(D7) EP 2 030 613 A

Aus D1 und D2 ist jeweils die Verwendung von Schichtsilikaten bekannt, die mit Alkylammoniumionen modifiziert sind. Die entsprechenden Kautschukmischungen enthalten mindestens einen Covernetzer und zeichnen sich durch eine hohe Reißdehnung bei gleichzeitig gutem Spannungswert und gutem Weiterreißwiderstand aus.

D3 beschreibt eine Kautschukmischung, bevorzugt für den Innerliner von Fahrzeugluftreifen, die sich durch einen hohen Anteil von 50 bis 100 phr an Halobutylkautschuk auszeichnet. Aufgabe der D3 ist eine reduzierte Weichmacherdiffusion und gute Druck- und Zugeigenschaften der Vulkanisate.

Die Offenbarung einer Kautschukmischung und eines Verfahrens zur Herstellung einer Kautschukmischung, welche als Kautschukkomponente Naturkautschuk, als Füllstoffe  Kaolin und Metakaolin und Ruß und ein quaternäres Ammoniumsalz als Kupplungsagenz enthält, ist aus D4 bekannt.

D5 beschreibt eine Kautschukmischung, insbesondere für den Innerliner eines Fahrzeugluftreifens, der 40 bis 100 phr Halobutylkautschuk, maximal 60 phr eines weiteren Kautschuks und Talk enthält. Aufgabe der D5 ist eine hohe Luftdichtigkeit und eine verbesserte Ermüdungsbeständigkeit.

D6 beschreibt in den Beispielen 2- 7, 9- 11, 17, 19, 20, 26, 27 Kautschukzusammensetzungen zur Verwendung in Reifen, die Naturkautschuk, Polybutadien, Ruß und Talk enthalten. Andere Beispiele enthalten Kaolin, allerdings kein Polybutadien.

D7 offenbart in den Beispielen E1 und E2 Kautschukzusammensetzungen zur Verwendung in Reifen, die 60 phr Naturkautschuk, 30 phr Polybutadien, 10 phr SBR, 60 phr Ruß und 10 phr einer Talk/ Chlorit- Mischung (Luzenac 10M2) enthalten.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Aufgabe der Erfindung ist es nun, einen Fahrzeugluftreifen bereitzustellen, der sich durch verbesserte Luftdichtigkeit und verbesserte Ermüdungsbeständigkeit auszeichnet.

Gelöst wird diese Aufgabe dadurch, dass wenigstens zwei innere Bauteile, bevorzugt wenigstens drei innere Bauteile, des Fahrzeugluftreifens aus einer qualitativ und quantitativ gleich zusammengesetzten Kautschukmischung bestehen, wobei die Kautschukmischung folgende Zusammensetzung hat:

- 10 bis 60 phr zumindest eines natürlichen oder synthetischen Polyisoprens und
- 20 bis 60 phr zumindest eines Polybutadienkautschuks und
- 0 bis 60 phr zumindest eines Styrolbutadienkautschuks und
- 0 bis 30 phr zumindest eines Halobutylkautschuks und
- 40 bis 100 phr zumindest eines Rußes mit einer STSA-Oberfläche gemäß ASTM-D 6556 von 10 bis100 $m^2$/g und einer DBP-Zahl gemäß ASTM-D 2414 von 50 bis 160 mL/100 g und
- 5 bis 80 phr zumindest eines delaminierten Talkes und / oder eines Kaolinits und
- weitere Zusatzstoffe.

Bei den Bauteilen handelt es sich um Seitenwand und / oder Innenseele und / oder Kernprofil und / oder Gürtel und / oder Schulter und / oder Gürtelprofil und / oder Squeege und / oder Karkasse und / oder Wulstverstärker und / oder Wulstprofil und / oder Hornprofil und / oder Bandage.

Bevorzugt ist es allerdings, wenn es sich bei den Bauteilen um Seitenwand und / oder Innenseele und / oder Wulstprofil und / oder Kernprofil handelt.

Die beschriebene Kautschukmischung ermöglicht somit die Herstellung von Fahrzeugluftreifen aus einem Bauteil, welches bevorzugt die herkömmlichen Bauteile Seitenwand, Wulstprofil und Innenseele ersetzt. Dieses Ersatzbauteil beginnt unterhalb des Laufstreifens und erstreckt sich an Stelle der herkömmlichen Seitenwand und des Hornprofils, setzt sich im Inneren des Reifens um den Kern an Stelle der Innenseele fort und führt wieder über Hornprofil und Seite des Reifens unter den Laufstreifen auf der gegenüberliegenden Reifenseite zurück. Damit wird die bisherige kosten- und arbeitsintensive Bauweise vereinfacht und die Herstellung eines leichteren Reifens ermöglicht.

Die Kautschukmischung enthält 10 bis 60 phr, bevorzugt 20 bis 40 phr zumindest eines natürlichen oder synthetischen Polyisoprens.

Weiterhin enthält die Kautschukmischung 20 bis 60 phr, bevorzugt 40 bis 60 phr zumindest eines Polybutadienkautschuks. In einer besonders bevorzugten Ausführungsform handelt es sich dabei um einen Polybutadienkautschuk mit einem cis-Anteil von mehr als 90 Gew. -%.

In der Kautschukmischung sind ebenso 0 bis 60 phr, bevorzugt 0 bis 40 phr, wenigstens aber 0,1 phr, insbesondere wenigstens 0,5 phr, zumindest eines Styrolbutadienkautschuks enthalten. Dies kann ein lösungspolymerisierter oder ein emulsionspolymerisierter Styrolbutadienkautschuk sein.

Erfindungswesentlich ist es, wenn in der Kautschukmischung lediglich ein niedriger Anteil zumindest eines Halobutylkautschuks eingesetzt wird. wird. Der Gesamtanteil an Halobutylkautschuk liegt daher bei 0 bis 30 phr, wenigstens aber 0,1 phr und insbesondere wenigsten 0,5 phr.

Wie bereits erwähnt ist der fachkundigen Person bis dato eigentlich bekannt, dass zur Erlangung einer hohen Gasdichtigkeit grundsätzlich ein hoher Anteil eines Halobutylkautschuks notwendig ist. Ein hoher Anteil Halobutylkautschuk würde die Haftung der erfindungsgemäßen Kautschukmischung, insbesondere, wenn wenigstens zwei innere Bauteile des Fahrzeugluftreifens aus dieser Mischung bestehen, sehr negativ beeinträchtigen.

Der verwendete Kautschuk kann funktionalisiert sein. Es handelt sich um eine Funktionalisierung mit Hydroxylgruppen und / oder Epoxygruppen und / oder Siloxangruppen und / oder Aminogruppen und / oder Phtalocyaningruppen und/oder Aminosiloxangruppen und/oder Carboxylgruppen und / oder weiteren Funktionalisierungen, die mit eine chemische Bindung mit den verwendeten hellen Füllstoffen eingehen können.

Diese Funktionalisierungen sind dem Fachmann auch als Modifizierungen bekannt.

Der Kautschuk kann auch nicht funktionalisiert sein, so dass in der Kautschukmischung entweder alle Kautschuke, ein Teil der Kautschuke oder kein Kautschuk funktionalisiert ist.

Möglich ist es aber auch, dass noch weitere, bisher nicht erwähnte, Kautschuke in der Kautschukmischung eingemischt werden.

Insbesondere Styrol- Isopren- Butadien- Terpolymer oder Ethylen- Propylen- Dien- Kautschuk kommen bei der Herstellung von technischen Gummiartikeln, wie Gurte, Riemen und Schläuche, zum Einsatz.

Ein wichtiger Bestandteil der erfindungsgemäßen Kautschukmischung ist das Vorhandensein von Ruß und zwar in Mengen von 40 bis 100 phr, bevorzugt in Mengen von 50 bis 100 phr.

Durch den Einsatz eines Rußes mit einer STSA-Oberfläche gemäß ASTM-D 6556 von 10 bis 100 $m^2$/g und eine DBP-Zahl gemäß ASTM-D 2414 von 50 bis 160 mL/100 g können die Riss- und die Ermüdungsbeständigkeit besonders stark verbessert werden.

Der Wert für STSA (statistical thickness surface area) liefert basierend auf der Stickstoffadsorptionsmessung die Oberfläche ohne Porositäten, während die DBP-Zahl gemäß ASTM D 2414 das spezifische Absorptionsvolumen eines Rußes oder eines hellen Füllstoffes mittels Dibutylphthalat bestimmt.

Es ist aber durchaus möglich, dass zusätzlich zumindest eine Kieselsäure in der Kautschukmischung Verwendung findet.

Findet Kieselsäure in der erfindungsgemäßen Kautschukmischung Verwendung, so ist sie vollständig durch ein geeignetes Kupplungsagens an die Polymermatrix angebunden und in Mengen von 0 bis 100 phr, bevorzugt 0 bis 50 phr, vorhanden.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in $m^2/g$ und die CTAB-Oberfläche gemäß ASTM D 3765 als Maß für die äußere Oberfläche, die oftmals als die kautschukwirksame Oberfläche angesehen wird, in $m^2/g$ angegeben.

Bevorzugt werden Kieselsäuren mit einer Stickstoff-Oberfläche größer oder gleich 110 $m^2/g$, bevorzugt zwischen 115 und 300 $m^2/g$, besonders bevorzugt zwischen 150 und 280 $m^2/g$, und einer CTAB-Oberfläche zwischen 100 und 260 $m^2/g$, bevorzugt zwischen 140 und 200 $m^2/g$, eingesetzt.

Falls ein Kupplungsagenz, in Form von Silan, Organosilan oder einer siliziumorganischen Verbindung, verwendet wird, so beträgt die Menge des Kupplungsagens 0 bis 10 phr, bevorzugt 0 bis 5 phr, besonders bevorzugt 0 bis 3 phr, insbesondere wenigstens 0,1 phr. Als Kupplungsagenzien können dabei alle dem Fachmann für die Verwendung in Kautschukmischungen Kupplungsagenzien verwendet werden. Besonders zu erwähnen sind hierbei Mercaptosilane und hierbei insbesondere solche, welche sich durch eine Reduzierung der leicht flüchtigen organischen Bestandteile auszeichnen, wie sie, beispielhaft für weitere Druckschriften, in DE 10 2005 057 801 A1, WO99/09036 A1, WO2002/048256 A2 und WO2006/015010 A2 zu finden sind.

Die erfindungsgemäße Kautschukmischung enthält 5 bis 80 phr, bevorzugt 10 bis 80 phr, besonders bevorzugt 20 bis 80 phr, ganz besonders bevorzugt 20 bis 70 phr und wiederum ganz besonders bevorzugt 25 bis 60 phr zumindest eines delaminierten Talkes und / oder eines delaminierten Kaolinits.

Der delaminierte Talk zeichnet sich in einer besonderen Ausführungsform dadurch aus, dass er eine CTAB-Oberfläche gemäß ASTM-D 2765 von 20 bis 26 $m^2/g$ und eine mittlere Partikelgröße ($D_{50}$) von 6 bis 14 $\mu$m gemessen mittels Laserbeugung von kohärentem Licht hat. Weiterhin beträgt das Seitenverhältnis (aspect ratio) 2,3 bis 3,3 und der Schichtindex (lamellarity index) des delaminierten Talks 3 bis 7. Der Schichtindex ist ein Maß für die Talkmorphologie, d. h. für den Grad der Delaminierung (Entblätterung der Schichten); bei gleicher Feinheit des Talkes (bestimmt durch Laserbeugung) zeigt ein höherer Schichtindex eine höhere Talkstruktur an. Der Schichtindex wird ermittelt durch folgende Formel ermittelt:

$$\text{Schichtindex} = \frac{(\text{Partikelgröße aus Laserbeugung}) - (\text{Partikelgröße aus Sedimentation})}{(\text{Partikelgröße aus Sedimentation})}$$

Für die Ermittlung der Partikelgröße durch Sedimentation wurde ein SediGraph 5100 Partikelgrößenmessgerät der Firma Micromeritics Instruments, Deutschland verwendet. Ein Talk mit den vorgenannten Eigenschaften kann z. B. im Nassprozess gemäß US 6,348,536 B1 hergestellt werden.

Der delaminierte Kaolinit zeichnet sich in einer besonderen Ausführungsform dadurch aus, dass er eine CTAB-Oberfläche gemäß ASTM-D 2765 von 10 bis 40 $m^2/g$ und eine mittlere Partikelgröße ($D_{50}$) von 5 bis 15 $\mu$m hat. Weiterhin beträgt der Schichtindex (lamellarity index) des delaminierten Kaolinits 3 - 15.

Weiterhin enthält die Kautschukmischung noch weitere Zusatzstoffe.

Weitere Zusatzstoffe beinhaltet im Wesentlichen das Vernetzungssystem (Vernetzer, Beschleuniger und Verzögerer), das Weichmachersystem, Verstärkungsmittel, wie z.B. Kreide, Verstärkerharze, Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 bis 80 phr. Weitere Zusatzstoffe beinhaltet auch eine Verbindung, die Zinkionen enthält. Hierbei handelt es sich bevorzugt um Zinkoxid in Mengen von 0,1 bis 10 phr, bevorzugt 0,2 bis 8 phr, besonders bevorzugt 0,2 bis 4 phr.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 $m^2/g$ auf. Es kann aber auch so genanntes nano-Zinkoxid mit einer BET-Oberfläche von 10 bis 60 $m^2/g$ verwendet werden.

Der oder die Vulkanisationsbeschleuniger ist bzw. sind ausgewählt aus der Gruppe der Sulfenamidbeschleuniger und / oder Thiazolbeschleuniger und / oder Guanidinbeschleuniger und / oder Thiurambeschleuniger und / oder Mercaptobeschleuniger und / oder Dithiocarbamatbeschleuniger und /oder Aminbeschleuniger und / oder Thioharnstoffe und / oder Dithiophosphate.

Das Weichmachersystem ist ausgewählt aus der Gruppe, bestehend aus Mineralölen und / oder naphtenischen Ölen und / oder synthetischen Weichmachern und / oder Fettsäuren und / oder Fettsäurederivaten und / oder Harzen und / oder Faktisse und / oder niedermolekularen Polymeren und / oder Dimerdiolen und / oder Dimerfettsäuren und / oder Pflanzenölen.

Handelt es sich bei dem Weichmachersystem um ein System, welches Mineralöl enthält, so ist das Mineralöl ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle. Das Mineralöl wird bevorzugt in Mengen von 1 bis 50 phr eingesetzt.

Das Weichmachersystem enthält somit wenigstens einen der genannten Weichmacher, wobei als Weichmachersystem auch eine Kombination von zwei oder mehr der genannten Weichmacher in Frage kommt.

Die Vulkanisation der Kautschukmischung wird vorzugsweise in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den der fachkundigen Person gebräuchlichen Mengen (0,4 bis 4 phr, Schwefel bevorzugt in Mengen von 1,5 bis 2,5 phr) der Kautschukmischung zugesetzt.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Die Kautschukmischung bietet zusätzlich den Vorteil, dass durch die Verwendung von delaminiertem Talk und / oder delaminiertem Kaolinit der Füllgrad im Innenmischer erhöht werden kann. Dies führt zu einer Kapazitätserhöhung und somit zu einer Reduktion der Herstellungskosten.

Bei Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der Kautschukmischung für eine oder mehrere unterschiedliche Body-Mischungen dienen dann dem Aufbau eines Reifenrohlings.

Die Erfindung soll nun anhand von Vergleichs- und Ausführungsbeispielen, die in Tabellen 1 und 2 zusammengefasst sind, näher erläutert werden. Die mit "E" gekennzeichneten Mischungen sind hierbei Mischungen gemäß Anspruch 1, während es sich bei den mit "V" gekennzeichneten Mischungen um Vergleichsmischungen handelt. Die Abkürzungen in eckigen Klammern bedeuten im Einzelnen:

[IS] = Innenseele, d.h. es handelt sich um eine übliche Mischungszusammensetzung für eine Innenseele eines Fahrzeugluftreifens;

[SW] = Seitenwand, d.h. es handelt sich um eine übliche Mischungszusammensetzung für eine Seitenwand eines Fahrzeugluftreifens;

[WP] = Wulstprofil, d.h. es handelt sich um eine übliche Mischungszusammensetzung für ein Wulstprofil eines Fahrzeugluftreifens.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:

- Shore-A-Härte bei Raumtemperatur gemäß DIN 53 505
- Rückprallelastizität bei Raumtemperatur gemäß DIN 53 512
- Spannungswert bei 100% Dehnung bei Raumtemperatur gemäß DIN 53 504
- Zugfestigkeit bei Raumtemperatur gemäß DIN 53 504
- Reißenergie bei Raumtemperatur gemäß DIN 53 448
- Luftpermeabilität gemäß DIN 53 536 bei 70 °C Lufttemperatur
- Monsanto Ermüdungstest (Fatigue to failure Tester) bei 136 % Dehnung und Raumtemperatur

**Tabelle 1**

| Bestandteile | Einheit | V1 [IS] | V2 [SW] | V3 [WP] | E1 | E2 | E3 |
|---|---|---|---|---|---|---|---|
| Halobutylkautschuk[g] | phr | 55 | - | - | - | - | - |
| Polyisopren[a] | phr | 30 | 50 | 40 | 40 | 30 | 20 |
| BR[b] | phr | - | 20 | 60 | 60 | 50 | 40 |
| SBR[c] | phr | 15 | 30 | - | - | 20 | 40 |
| Ganzreifenregenerat[f] | phr | - | - | | - | 15 | 30 |
| Ruß, N339 | phr | - | 30 | 74 | 55 | 55 | 55 |
| Ruß, N660 | phr | 58 | - | - | 20 | 20 | 20 |
| Weichmacher[d] | phr | 16 | 16 | 9 | 3 | 8 | 8 |
| Delaminierter Talk[e] | phr | - | - | - | 30 | 30 | 30 |
| Calciumcarbonat | phr | 50 | - | - | - | - | - |
| Harz | phr | 1 | 2 | 4 | 3 | 3 | 3 |
| ZnO | phr | 3 | 2.5 | 3 | 3 | 3 | 3 |
| Stearinsäure | phr | 2 | 2 | 1.5 | 2 | 2 | 2 |
| Alterungs-, Ozonschutzmittel und Verstärkerwachs | phr | 2 | 8 | 6 | 7 | 9 | 9 |
| DPG, CBS, Schwefel | phr | 2,2 | 3,3 | 4,7 | 2,5 | 2,7 | 2,7 |

[a] TSR
[b] High-cis Co-Polybutadien , cis-Anteil $\geq$ 95 Gew. -%, Ubepol BR150, Thai Synthetic Rubber
[c] Styrolbutadienkautschuk, KER1500, Synthos Dwory
[d] RAE
[e] Talk, Mistron HAR, Rio Tinto Minerals
[f] Ganzreifenregenerat: gemahlener und / oder granulierter vulkanisierter Kautschuk aus Altreifen
[g] Chlorbutylkautschuk

**Tabelle 2**

| Eigenschaften | Einheit | V1 [IS] | V2 [SW] | V3 [WP] | E1 | E2 | E3 |
|---|---|---|---|---|---|---|---|
| Zugfestigkeit | MPa | 6 | 12 | 14 | 14 | 13 | 12 |
| Reißdehnung | % | 500 | 520 | 240 | 460 | 460 | 500 |
| Spannungswert 100 % | MPa | 1,6 | 1,0 | 4,5 | 3,2 | 3,1 | 2,7 |
| Härte | ShoreA | 52 | 50 | 74 | 69 | 69 | 69 |
| Rückprallelastizität | % | 15 | 56 | 43 | 34 | 30 | 29 |
| Permeationskoeffizient | $m^2/(Pa*s)$ | $10*10^{-17}$ | $40*10^{-17}$ | $35*10^{-17}$ | $25*10^{-17}$ | $24*10^{-17}$ | $22*10^{-17}$ |
| Monsanto Ermüdung | kZyklen | 30 | 30 | < 5 | 400 | 130 | 180 |

Die Tabelle 2 zeigt, dass eine Kautschukmischung, wie sie üblicherweise für die Innenseele eines Fahrzeugluftreifens verwendet wird (siehe V1), mit einem hohen Anteil an Halobutylkautschuk einen vergleichsweise niedrigen Permeationskoeffizienten, eine klassische Seitenwand- oder Wulstprofilmischung jedoch einen sehr hohen Permeationskoeffizient aufweist. Ein hoher Anteil Halobutylkautschuk würde die Haftung der Kautschukmischung, insbesondere, wenn wenigstens zwei innere Bauteile des Fahrzeugluftreifens aus dieser Mischung bestehen, sehr negativ beeinträchtigen. Mit den Mischungen E1 bis E3 ist es möglich, die für den Reifen wichtigen Eigenschaften mehrerer Mischungen ohne hohen Halobutylkautschukgehalt zu kombinieren, da durch Einsatz geeigneter Füllstoffe sowohl eine gute Luftdichtigkeit, aber auch eine im Vergleich zu den Standardmischungen (siehe V 1 bis V3) gute Ermüdungsbeständigkeit erzielt werden kann. Die Steifigkeitswerte befmden sich in einem Bereich, der einen guten Felgensitz beim Einsatz im Bereich des Wulstprofils ermöglicht.

**Patentansprüche**

1. Fahrzeugluftreifen, **dadurch gekennzeichnet, dass** wenigstens zwei innere Bauteile des Fahrzeugluftreifens aus einer qualitativ und quantitativ gleich zusammengesetzten Kautschukmischung bestehen, wobei die Kautschukmischung folgende Zusammensetzung hat:

- 10 bis 60 phr zumindest eines natürlichen oder synthetischen Polyisoprens und
- 20 bis 60 phr zumindest eines Polybutadienkautschuks und
- 0 bis 60 phr zumindest eines Styrolbutadienkautschuks und
- 0 bis 30 phr zumindest eines Halobutylkautschuks und
- 40 bis 100 phr zumindest eines Rußes mit einer STSA-Oberfläche gemäß ASTM-D 6556 von 10 bis 100 m$^2$/g und einer DBP-Zahl gemäß ASTM-D 2414 von 50 bis 160 mL/100 g und
- 5 bis 80 phr zumindest eines delaminierten Talkes und / oder eines Kaolinits und
- weitere Zusatzstoffe.

2. Fahrzeugluftreifen nach Anspruch 1, **dadurch gekennzeichnet, dass** wenigstens drei innere Bauteile des Fahrzeugluftreifens aus einer qualitativ und quantitativ gleich zusammengesetzten Kautschukmischung bestehen.

3. Fahrzeugluftreifen nach einem der Ansprüche 1 oder 2, **dadurch gekennzeichnet, dass** es sich bei den Bauteilen um Seitenwand und / oder Innenseele und / oder Kernprofil und / oder Gürtel und / oder Schulter und / oder Gürtelprofil und / oder Squeege und / oder Karkasse und / oder Wulstverstärker und / oder Wulstprofil und / oder Hornprofil und / oder Bandage handelt.

4. Fahrzeugluftreifen nach einem der Ansprüche 1 bis 3, **dadurch gekennzeichnet, dass** es sich bei den Bauteilen um Seitenwand und / oder Innenseele und / oder Wulstprofil und / oder Kernprofil handelt.

5. Fahrzeugluftreifen nach einem der Ansprüche 1 bis 4, **dadurch gekennzeichnet, dass** der delaminierte Talk der Kautschukmischung eine CTAB-Oberfläche gemäß ASTM-D 3765 von 20 bis 26 m$^2$/g hat.

6. Fahrzeugluftreifen nach einem der Ansprüche 1 bis 5, **dadurch gekennzeichnet, dass** der delaminierte Talk der Kautschukmischung eine mit Laserbeugungsmessung bestimmte mittlere Partikelgröße ($D_{50}$) von 6 bis 14 $\mu$m hat.

7. Fahrzeugluftreifen nach einem der Ansprüche 1 bis 6, **dadurch gekennzeichnet, dass** der delaminierte Talk der Kautschukmischung einen Schichtindex (lamellarity index) von 3 bis 7 hat.

8. Fahrzeugluftreifen nach einem der Ansprüche 1 bis 7, **dadurch gekennzeichnet, dass** der delaminierte Talk der Kautschukmischung ein Seitenverhältnis (aspect ratio) von 2,3 bis 3,3 hat.

9. Fahrzeugluftreifen nach einem der Ansprüche 1 bis 8, **dadurch gekennzeichnet, dass** der delaminierte Kaolinit der Kautschukmischung eine CTAB-Oberfläche gemäß ASTM-D 3765 von 10 bis 40 m$^2$/g hat.

10. Fahrzeugluftreifen nach einem der Ansprüche 1 bis 9, **dadurch gekennzeichnet, dass** der delaminierte Kaolinit der Kautschukmischung eine durchschnittliche Partikelgröße ($D_{50}$) von 5 bis 15 $\mu$m hat.

11. Fahrzeugluftreifen nach einem der Ansprüche 1 bis 10, **dadurch gekennzeichnet, dass** der delaminierte Kaolinit der Kautschukmischung einen Schichtindex (lamellarity index) von 3 bis 15 hat.

**Claims**

1. Pneumatic vehicle tyre, **characterized in that** at least two inner components of the pneumatic vehicle tyre consist of a rubber mixture that is identical in terms of quality and quantity, the rubber mixture having the following composition:

- 10 to 60 phr of at least one natural or synthetic polyisoprene,

- 20 to 60 phr of at least one polybutadiene rubber,
- 0 to 60 phr of at least one styrene butadiene rubber,
- 0 to 30 phr of at least one halobutyl rubber,
- 40 to 100 phr of at least one carbon black with an STSA surface as defined by ASTM-D 6556 of from 10 to 100 $m^2$/g and a DBP number as defined by ASTM-D 2414 of from 50 to 160 ml/100g,
- 5 to 80 phr of at least one delaminated talc and/or kaolinite, and
- other additives.

2. Pneumatic vehicle tyre according to Claim 1, **characterized in that** at least three inner components of the pneumatic vehicle tyre consist of a rubber mixture that is identical in terms of quality and quantity.

3. Pneumatic vehicle tyre according to either of Claims 1 and 2, **characterized in that** the components are the sidewall and/or inner core and/or bead filler and/or breaker belt and/or shoulder and/or belt profile and/or squeegee and/or carcass and/or bead reinforcer and/or bead profile and/or flange profile and/or bandage.

4. Pneumatic vehicle tyre according to one of Claims 1 to 3, **characterized in that** the components are the sidewall and/or inner core and/or bead profile and/or bead filler.

5. Pneumatic vehicle tyre according to one of Claims 1 to 4, **characterized in that** the delaminated talc of the rubber mixture has a CTAB surface as defined by ASTM-D 3765 of from 20 to 26 $m^2$/g.

6. Pneumatic vehicle tyre according to one of Claims 1 to 5, **characterized in that** the delaminated talc of the rubber mixture has an average particle size ($D_{50}$), determined by laser diffraction measurement, of from 6 to 14 $\mu$m.

7. Pneumatic vehicle tyre according to one of Claims 1 to 6, **characterized in that** the delaminated talc of the rubber mixture has a lamellarity index of from 3 to 7.

8. Pneumatic vehicle tyre according to one of Claims 1 to 7, **characterized in that** the delaminated talc of the rubber mixture has an aspect ratio of 2.3 to 3.3.

9. Pneumatic vehicle tyre according to one of Claims 1 to 8, **characterized in that** the delaminated kaolinite of the rubber mixture has a CTAB surface as defined by ASTM-D3765 of from 10 to 40 $m^2$/g.

10. Pneumatic vehicle tyre according to one of Claims 1 to 9, **characterized in that** the delaminated kaolinite of the rubber mixture has an average particle size ($D_{50}$) of from 5 to 15 $\mu$m.

11. Pneumatic vehicle tyre according to one of Claims 1 to 10, **characterized in that** the delaminated kaolinite of the rubber mixture has a lamellarity index of from 3 to 15.

**Revendications**

1. Bandage pneumatique pour roue de véhicule, **caractérisé en ce qu'**au moins deux composants intérieurs du bandage pneumatique pour roue de véhicule sont constitués de mélanges de caoutchouc de même composition tant sur le plan qualitatif que quantitatif, les mélanges de caoutchouc ayant la composition suivante :

10 à 60 phr d'au moins un polyisoprène d'origine naturelle ou synthétique,
20 à 60 phr d'au moins un caoutchouc au polybutadiène,
0 à 60 phr d'au moins un caoutchouc au styrène-butadiène,
0 à 30 phr d'au moins un caoutchouc à l'halogénobutyle,
40 à 100 phr d'au moins une suie dont la surface STSA selon la norme ASTM-D 6556 est de 10 à 100 $m^2$/g et dont l'indice DBP selon la norme ASTM-D 2414 est de 50 à 160 ml/100 g,
5 à 80 phr d'au moins un talc déstratifié et/ou d'une kaolinite déstratifiée et
d'autres additifs.

2. Bandage pneumatique pour roue de véhicule selon la revendication 1, **caractérisé en ce qu'**au moins trois composants intérieurs du bandage pneumatique pour roue de véhicule sont constitués de mélanges de caoutchouc de composition identique tant sur le plan qualitatif que sur le plan quantitatif.

3. Bandage pneumatique pour roue de véhicule selon l'une des revendications 1 ou 2, **caractérisé en ce que** les composants sont la paroi latérale et/ou l'âme intérieure et/ou le profil d'âme et/ou la ceinture et/ou l'épaulement et/ou le profil de ceinture et/ou le "Squeege" et/ou la carcasse et/ou le renfort de bourrelet et/ou le profilé de bourrelet et/ou le profil de corne et/ou la bande de roulement.

4. Bandage pneumatique pour roue de véhicule selon l'une des revendications 1 à 3, **caractérisé en ce que** les composants sont la paroi latérale et/ou l'âme intérieure et/ou le profilé de bourrelet et/ou le profilé d'âme.

5. Bandage pneumatique pour roue de véhicule selon l'une des revendications 1 à 4, **caractérisé en ce que** le talc déstratifié du mélange de caoutchouc présente une surface CTAB selon la norme ASTM-D 3765 de 20 à 26 m$^2$/g.

6. Bandage pneumatique pour roue de véhicule selon l'une des revendications 1 à 5, **caractérisé en ce que** les particules de talc déstratifié du mélange de caoutchouc ont une taille moyenne ($D_{50}$), déterminée par diffraction laser, de 6 à 14 $\mu$m.

7. Bandage pneumatique pour roue de véhicule selon l'une des revendications 1 à 6, **caractérisé en ce que** le talc déstratifié du mélange de caoutchouc présente un indice de stratification ("lamellarity index") de 3 à 7.

8. Bandage pneumatique pour roue de véhicule selon l'une des revendications 1 à 7, **caractérisé en ce que** le talc déstratifié du mélange de caoutchouc présente un rapport d'aspect ("aspect ratio") de 2,3 à 3,3.

9. Bandage pneumatique pour roue de véhicule selon l'une des revendications 1 à 8, **caractérisé en ce que** la kaolinite déstratifiée du mélange de caoutchouc présente une surface CTAB selon la norme ASTM-D 3765 de 10 à 40 m$^2$/g.

10. Bandage pneumatique pour roue de véhicule selon l'une des revendications 1 à 9, **caractérisé en ce que** les particules de kaolinite déstratifiée du mélange de caoutchouc ont une taille moyenne ($D_{50}$) de 5 à 15 $\mu$m.

11. Bandage pneumatique pour roue de véhicule selon l'une des revendications 1 à 10, **caractérisé en ce que** la kaolinite déstratifiée du mélange de caoutchouc présente un indice de stratification ("lamellarity index") de 3 à 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058297 A1
- DE 10059287 B4
- DE 102005044999 A1
- EP 0178079 A1
- DE 102005004031 A1
- US 4598105 A
- EP 2030613 A
- DE 102005057801 A1
- WO 9909036 A1
- WO 2002048256 A2
- WO 2006015010 A2
- US 6348536 B1